# EUROPEAN PATENT APPLICATION

(11) **EP 4 759 389 A1**
(43) Date of publication of application: **17.06.2026**
(21) Application number: 25222054.6
(22) Date of filing: 10.12.2025
(51) Int. Cl.: A63F 13/5375, A63F 13/79, A63F 13/85, G06Q 30/0601

(54) **INFORMATION PROCESSING SYSTEM, A COMPUTER-IMPLEMENTED METHOD**

(30) Priority: 13.12.2024 JP 2024218697
(71) Applicant: Nintendo Co., Ltd., Kyoto 601-8501 (JP)
(72) Inventor: NAKAO, Koichi, Kyoto, 601-8501 (JP); HIROSE, Junya, Kyoto, 601-8501 (JP); SAKUMA, Kyoko, Kyoto, 601-8501 (JP); NISHIKI, Shoko, Kyoto, 601-8501 (JP); OKAWA, Chihiro, Kyoto, 601-8501 (JP)
(74) Representative: Bardehle Pagenberg Partnerschaft mbB Patentanwälte Rechtsanwälte

(57) **Abstract**

An information processing system comprises: one or more processors; and one or more memories storing instructions that cause the one or more processors to perform operations comprising: determining a plurality of games, comprising a first game, based on first data associated with a user; acquiring a video associated respectively with each of the plurality of games; determining a first recommendation reason for recommending the first game, based on data associated with the first game and second data associated with the user; and generating a first image comprising the acquired video associated with the first game and the first recommendation reason; generating a second image comprising an item for acquiring the first game based on user input.

## Description

### Technical Field

The present invention relates to an information processing system that presents information associated with a game.

### Background Art

Conventionally, there are online services through which a user may acquire a game (Patent Document 1). The game suggestion apparatus described in Japanese Patent Application Publication No. 2013-242717 displays a recommend screen comprising a title, a description comprised in game data, an image specified in a thumbnail, and a game start URL.

### Summary of Invention

### Technical Problem

There has been room for improvement in a method of presenting information used as a reference when a user selects a game to acquire.

### Solution to Problem

### (Configuration 1)

An information processing system according to Configuration 1, comprising: a recommendation determination means configured to determine a plurality of games to recommend to a user based on first data associated with the user; a video acquisition means configured to acquire a video associated with each of the plurality of games; a recommendation reason determination means configured to determine a first recommendation reason for recommending a first game among the plurality of games to the user based on data associated with the first game and second data associated with the user; and an image output means configured to output a first image including the video associated with the first game and the first recommendation reason, wherein, when the first image is being output, the image output means outputs a second image including an item for acquiring the game for the user to acquire the first game, based on a first user input.

According to Configuration 1, it is possible to present, in a more appropriate manner, information that can serve as a more useful reference when the user selects a game to acquire.

### (Configuration 2)

The information processing system according to Configuration 1, wherein the recommendation determination means determines the plurality of games to recommend every predetermined period.

### (Configuration 3)

The information processing system according to Configuration 1 or 2, further comprising: a second data acquisition means configured to acquire the second data associated with the user, wherein the recommendation reason determination means determines the first recommendation reason when the second data associated with the user is acquired.

According to Configuration 3, it is possible to present the recommendation reason based on more up-to-date information.

### (Configuration 4)

The information processing system according to Configuration 3, wherein the information processing system includes a server and an information processing apparatus, the server includes the recommendation determination means, and the information processing apparatus includes the second data acquisition means and the recommendation reason determination means.

### (Configuration 5)

The information processing system according to Configuration 2, wherein the recommendation reason determination means changes the first recommendation reason when an update condition is satisfied within the predetermined period.

According to Configuration 5, it is possible to present recommendation reason that can serve as a more useful reference.

### (Configuration 6)

The information processing system according to Configuration 1, wherein the information processing system includes an information processing apparatus, and the information processing apparatus includes the video acquisition means, the image output means, and a game execution means configured to execute the acquired game.

According to Configuration 6, execution of a game and playback of a video associated with the game can be performed by the same information processing apparatus. For example, when the video is a gameplay footage of the game, it becomes easier for the user to envisage a state in which the user has actually acquired and is playing the game, and the video can be used as a reference when selecting a game to acquire.

### (Configuration 7)

The information processing system according to any one of Configuration 1 to 6, wherein the plurality of games include a second game, the recommendation reason determination means determines a second recommendation reason based on data associated with the second game and the second data associated with the user, and when the first image is being output, based on a predetermined condition, the image output means outputs, in place of the first image, a third image including the video associated with the second game and the second recommendation reason.

### (Configuration 8)

The information processing system according to any one of Configuration 1 to 7, wherein the plurality of games include a third game, the image output means outputs a fourth image including the video associated with the third game, and the fourth image does not include a third recommendation reason determined based on data associated with the third game and the second data associated with the user.

### (Configuration 9)

The information processing system according to any one of Configuration 1 to 8, wherein the image output means outputs a fifth image including game information associated with each of the plurality of games.

### (Configuration 10)

The information processing system according to any one of Configuration 1 to 9, wherein, when the second image is being output, the image output means outputs the first image based on a second user input.

### (Configuration 11)

The information processing system according to any one of Configuration 1 to 10, wherein the second image includes the video, the video included in the second image is reproduced based on video control data identical to video control data for the video in the first image, and the video control data includes a timestamp from a reproduction start time.

According to Configuration 11, the playback state of the video can be maintained when the screen transitions between the first image and the second image.

### (Configuration 12)

The information processing system according to any one of Configuration 1 to 11, further comprising a game selection means capable of selecting one game based on a third user input when the first image is not output, wherein, when the first game is selected by the game selection means, the image output means outputs a sixth image, and the sixth image includes at least the video associated with the first game and the item for acquiring the game for the user to acquire the first game.

### (Configuration 13)

The information processing system according to Configuration 12, wherein, when there is a plurality of the videos associated with the first game, the first image includes only one of the plurality of the videos, and the sixth image includes all of the plurality of the videos.

According to Configuration 13, it is possible to present, in a more appropriate manner, information that can serve as a more useful reference when the user selects a game to acquire.

### (Configuration 14)

The information processing system according to Configuration 12 or 13, wherein the information processing system includes an information processing apparatus, the information processing apparatus comprises: a storage means configured to store, when the second image or the sixth image is output, information used for the output of the second image or the sixth image; and the image output means, wherein, when outputting the second image or the sixth image, the image output means outputs the second image or the sixth image using the information used for the output if the information is in the storage means.

According to Configuration 14, it is possible to speed up processing in the information processing system.

### (Configuration 15)

A computer-implemented method according to Configuration 15, comprising: acquiring information on a plurality of games determined based on first data associated with a user; acquiring a video associated with each of the plurality of games; determining, a first recommendation reason for recommending a first game among the plurality of games to the user based on data associated with the first game and second data associated with the user; outputting a first image including the video associated with the first game and the first recommendation reason; and outputting, when the first image is being output, a second image including an item for acquiring the game for the user to acquire the first game based on a first user input.

### Brief Description of Drawings

FIG. 1 is a diagram showing an overall configuration of the information processing system of the present embodiment.
FIG. 2 is a diagram showing an external appearance of a game apparatus, which is an example of the information processing apparatus of the present embodiment.
FIG. 3 is a diagram showing a functional configuration of the information processing system of the present embodiment.
FIG. 4 is a diagram showing a screen transition displayed on the game apparatus of the present embodiment.
FIG. 5 is a diagram showing an example of a top screen.
FIG. 6 is a diagram showing an example of a video playback screen of an introductory video of a game.
FIG. 7 is a diagram showing an example of a detailed screen of a game.
FIG. 8 is a diagram showing an example of a list screen of titles of games to recommend.
FIG. 9 is a diagram showing an example of a ranking screen.
FIG. 10 is a flowchart showing an operation of introducing a game by the game apparatus.

### Description of Embodiments

The information processing system, the information processing apparatus, and A computer-implemented method of the present embodiment will be described below with reference to the drawings. Hereinafter, the game apparatus will be described as an example of the information processing apparatus, but the information processing apparatus of the present invention is not limited to the game apparatus, and may be applied to any apparatus that performs information processing, such as a smartphone, a tablet terminal, or a navigation device etc.

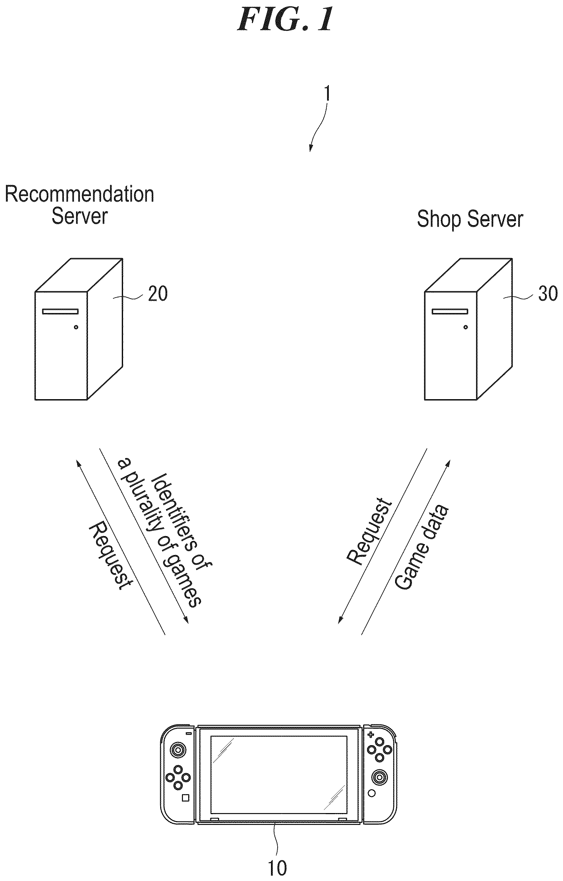

FIG. 1 is a diagram showing an overall configuration of the information processing system 1 of the present embodiment. The information processing system 1 comprises a recommendation server 20, a shop server 30, and a game apparatus 10. The game apparatus 10 is a terminal used by the user, and is an example of the information processing apparatus.

The recommendation server 20 is a server that provides identifiers of a plurality of games to recommend to the user in response to a request from the game apparatus 10 of the user.

In the present embodiment, the recommendation server 20 transmits identifiers of the plurality of games to the game apparatus 10. A plurality of recommendation servers 20 may be provided. Furthermore, when a plurality of recommendation servers 20 are provided, parts of processing for realizing a specific function may be executed by separate servers respectively.

The shop server 30 is a server that provides game data in response to a request from the game apparatus 10. The game data comprises data such as a title of the game, an introductory video of the game, or a price of the game etc. A plurality of shop servers 30 may be provided. When a plurality of shop servers 30 are provided, parts of processing for realizing a specific function may be executed by separate servers respectively.

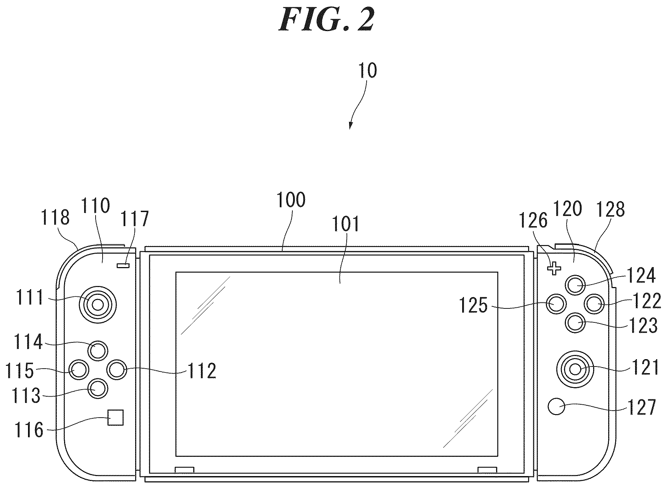

FIG. 2 is a diagram showing an external appearance of the game apparatus 10 of the present embodiment. The game apparatus 10 in the present embodiment comprises a game apparatus main body 100 comprising a touch panel display 101, a left controller 110, and a right controller 120. The left controller 110 comprises an analog stick 111 and four operation buttons (specifically, a right direction button 112, a down direction button 113, an up direction button 114, and a left direction button 115). Furthermore, the left controller 110 comprises a recording button 116, a minus button 117, and an L button 118.

The right controller 120 comprises an analog stick 121 as a direction input unit and four operation buttons (specifically, an A button 122, a B button 123, an X button 124, and a Y button 125), similarly to the left controller 110. Furthermore, the right controller 120 comprises a plus button 126, a home button 127, and an R button 128.

The left controller 110 and the right controller 120 may be attached to and detached from the game apparatus main body 100. That is, the game apparatus 10 may be used as an integrated apparatus by attaching the left controller 110 and the right controller 120 to the game apparatus main body 100. Furthermore, the game apparatus 10 may utilize the game apparatus main body 100, the left controller 110, and the right controller 120 as separate bodies.

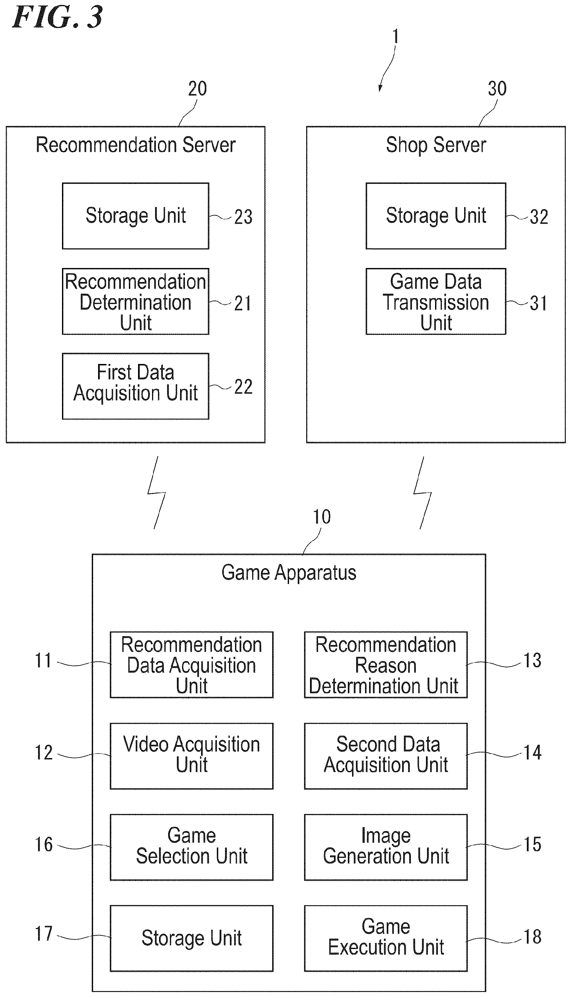

FIG. 3 is a diagram showing a functional configuration of the information processing system 1 of the present embodiment. The recommendation server 20 comprises a recommendation determination unit 21, a first data acquisition unit 22, and a storage unit 23. The recommendation determination unit 21 has a function of determining a plurality of games to recommend to the user of the game apparatus 10. In the present embodiment, information used by the recommendation determination unit 21 for determining the game comprises at least user data associated with the user to recommend and game data associated with the game. Here, user data used for determining the game to recommend is referred to as "first data associated with a user".

The first data acquisition unit 22 has a function of acquiring the first data associated with a user. The first data associated with a user is, for example, a user name, a user ID, an identifier of a game played by the user etc., and may comprise attributes such as gender or age of the user. The game data may comprise, meta information of the game, for example, ranking data of the game or data indicating whether the game is specially featured, in addition to data associated with the game itself, such as a genre, a release year, or a seller etc. The first data acquisition unit 22 acquires the first data associated with a user from a user data server that manages user data, which is not illustrated. Here, the user data server not only acquires data associated with the user from the game apparatus 10, but may also collect data associated with the user from other apparatuses linked to an account of the user. The first data acquisition unit 22 may acquire the first data associated with a user directly from the game apparatus 10.

An algorithm that determines a game to recommend by the recommendation determination unit 21 is not limited. For example, the game may be a game of the same genre as a game played by the user in the past, a game popular among users having the same attribute as the user, or a game popular among users having the same extent of game history as the user. When a large number of games correspond to the above-described criteria, or when there are few or no corresponding games, the recommendation determination unit 21 may narrow down the games to recommend based on a release date or ranking data etc. of the game.

The recommendation determination unit 21 determines the game to recommend at every specified period. For example, determination of the game to recommend is performed every week, and data stored in the storage unit 23 is updated. By performing determination of the game to recommend at every specified period in this way, another game will be recommended after the specified period elapses.

The recommendation determination unit 21 stores an identifier of the game determined as the game to recommend in the storage unit 23 in association with an identifier of the user. That is, the storage unit 23 stores an identifier of the game to recommend to each user.

In this way, by determining the game to recommend without waiting for a request from the user, for example, and storing data of the game to recommend in the storage unit 23, the identifier of the game to recommend may be quickly transmitted to the game apparatus 10 when there is a request from the game apparatus 10. By determining the game to recommend at every specified period, a motivation for the user to periodically confirm the game being recommended may be given.

Determination of the game to recommend is not limited to this, and may be performed, for example, in response to a request from the game apparatus 10. At this time, the identifier of the determined game may be transmitted directly to the game apparatus 10 without storing the identifier in the storage unit 23. Furthermore, the game to recommend may have a part or all of the game overwritten upon each update, or may be newly added while retaining pre-update data.

The shop server 30 comprises a game data transmission unit 31 and a storage unit 32. The storage unit 32 stores game data in association with an identifier of the game. The game data is, for example, data such as a title of the game, an introductory video of the game, a price, or a seller etc. The storage unit 32 may store a program of the game itself, and the shop server 30 may transmit the program of the game to the game apparatus 10 in response to a request. The shop server 30 may not store data of the introductory video of the game itself, and may store a URL indicating a storage location where the introductory video of the game is stored. In this case, the shop server 30 transmits the URL of the introductory video as game data.

When the game data transmission unit 31 receives a request for game data from the game apparatus 10, the game data transmission unit 31 reads out game data corresponding to the identifier of the game comprised in the request from the storage unit 32, and transmits the read out game data to the game apparatus 10. In other configurations, game data corresponding to the game to recommend may be transmitted to the recommendation server 20, for example, in response to a request received from the recommendation server 20. At this time, the game data may be transmitted from the recommendation server 20 to the game apparatus 10.

Next, a configuration of the game apparatus 10 will be described. To contribute to understanding of the following description, screen transition displayed by the game apparatus 10 will be described first.

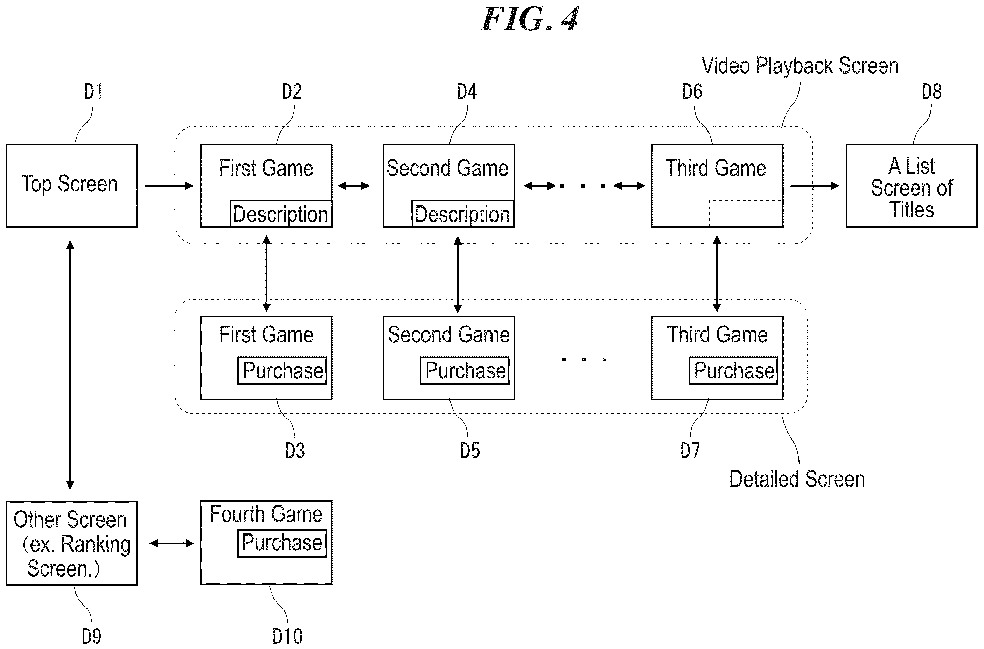

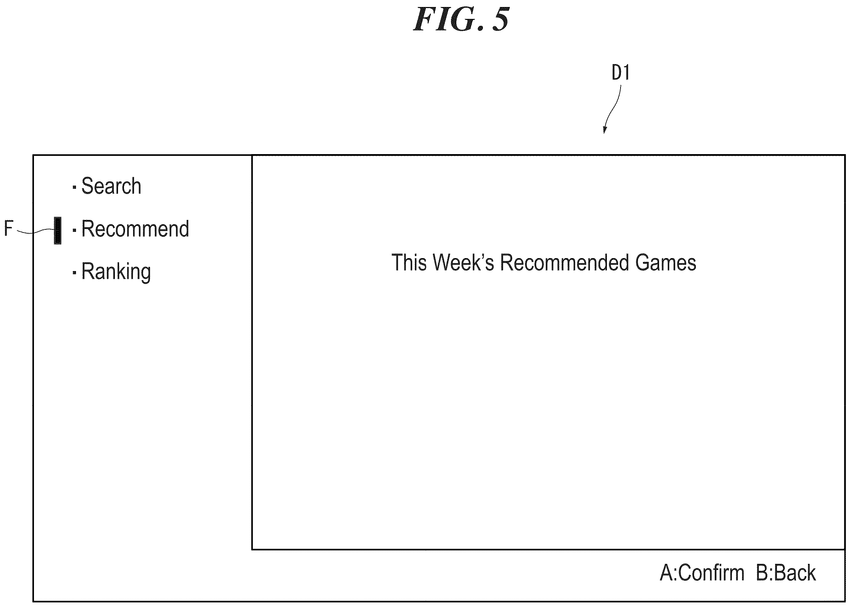

FIG. 4 is a diagram showing screen transition associated with presentation of the game to recommend, displayed on the game apparatus 10 of the present embodiment, and FIGS. 5 to 9 are diagrams showing examples of respective screens shown in FIG. 4. In the present embodiment, the game to recommend is presented on one screen of a shop application executed by the game apparatus 10. The shop application sends a request to the shop server 30 based on purchase input by the user on a specified screen in the shop application, and causes the user to acquire the game in response to the request. In the present embodiment, the acquired game is executed by the game apparatus 10. In other embodiments, a game that is not executed by the information processing apparatus where the shop application is executed may be acquired. Furthermore, the game to recommend may be presented by an application other than the shop application.

As shown in FIG. 4, in the present embodiment, screen transition to an introductory video playback screen D2 of the game to recommend is performed from a top screen D1 based on a specified operation, and screen transition may be sequentially performed from the introductory video playback screen D2 of one game to the next introductory video playback screen D4, ...D6, and after the introductory video playback screen D6 of the last game, screen transition is performed to a list screen D8 of titles of the game to recommend.

Screen transition to the list screen D8 is not limited to after the playback screen D6, and screen transition may be performed from other screens, for example, the playback screen D2. Furthermore, screen transition may be performed from a plurality of playback screens. In the following description, the introductory video playback screen of the game is referred to as a "video playback screen".

FIG. 5 is a diagram showing an example of the top screen D1. On the top screen D1, for example, a menu is displayed. In the example shown in FIG. 5, the menu of the top screen D1 comprises menu items of "Search," "Recommend," and "Ranking." On the top screen D1, screen transition to other screens may be performed by performing operation input. For example, in the example shown in FIG. 5, by selecting each menu item, screen transition may be performed to other screens corresponding to the respective items, for example, the video playback screen D2 of the game corresponding to "Recommend," and a ranking screen D9 corresponding to "Ranking."

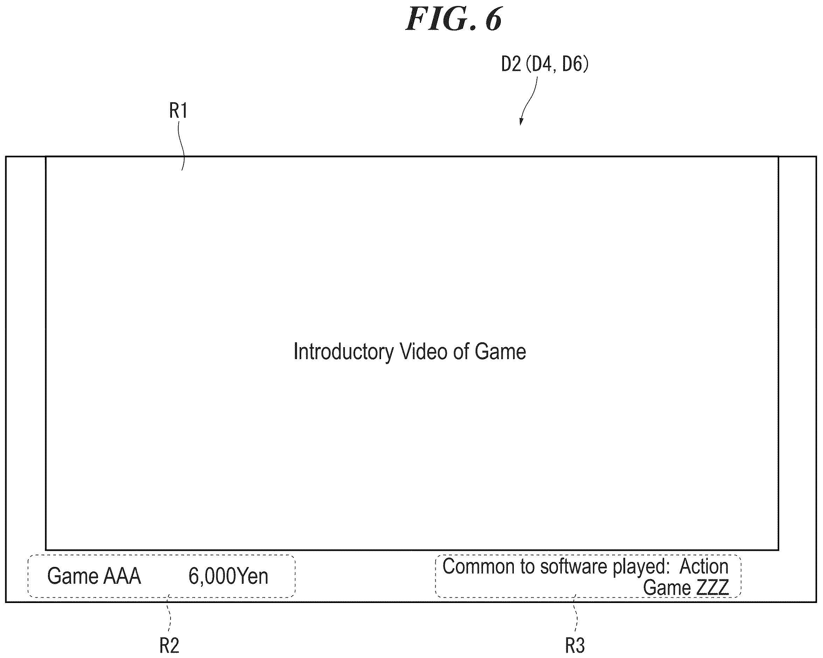

FIG. 6 is a diagram showing an example of the video playback screen D2. Here, the video playback screen D2 is used as an example, but configurations of the video playback screens D4 and D6 are also identical. On the video playback screen D2, an introductory video of the game is displayed in a region R1, and a title of the game and a price of the game are displayed in a region R2 at the lower left of the introductory video of the game. In the present embodiment, the region R1 occupies a relatively large ratio, so when the video displayed in the region R1 comprises an image displayed when the game is executed, the user may easily obtain a feeling of playing the game and imagine a game experience. Furthermore, a recommendation reason associated with the game is displayed in a region R3 at the lower right of the introductory video. A size and presence/absence of display of these regions may be switchable. Furthermore, positions of the regions R1 to R3 are not limited to the example shown in FIG. 6. Not limited to FIG. 6, the positions and sizes of the regions comprised in the respective diagrams are not limited to those shown in the figures in other figures either.

In the example shown in FIG. 6, the recommendation reason is "Common to software played: Action Game ZZZ." This indicates that the user has played the game ZZZ in the action category in the past, and the game AAA whose video is being reproduced is a game in the same action category as the game played in the past. In the present embodiment, one of the recommendation reasons is displayed in the region R3, but when there are a plurality of recommendation reasons, the recommendation reasons may be sequentially switched and displayed according to the passage of time. Furthermore, a plurality of recommendation reasons may be displayed simultaneously, or only one recommendation reason may be displayed based on a specified condition.

As shown in FIG. 4, the game apparatus 10 switches and displays the video playback screen D2 of the first game, the video playback screen D4 of the second game, ... the video playback screen D6 of the third game. Switching of the video playback screens D2, D4, and D6 is performed according to operation input by the user. Furthermore, screen transition toward the list screen D8 may be performed on condition that a specified time has elapsed even when there is no operation input from the user. Furthermore, in the present embodiment, screen transition from the list screen D8 to the video playback screen D6 of the third game, the top screen D1, and the detailed screens D3 to D7 is possible, but not limited to this, screen transition may be possible only to the top screen D1, for example.

When the A button is pressed on the video playback screens D2, D4, and D6 of the respective games, screen transition to detailed screens D3, D5, and D7 of the game is performed. The respective operation inputs in the present embodiment are one example. The operation input is not limited to operation input to a physical button etc., and may be a touch operation on the screen or a selection operation by a cursor of a virtual button etc.

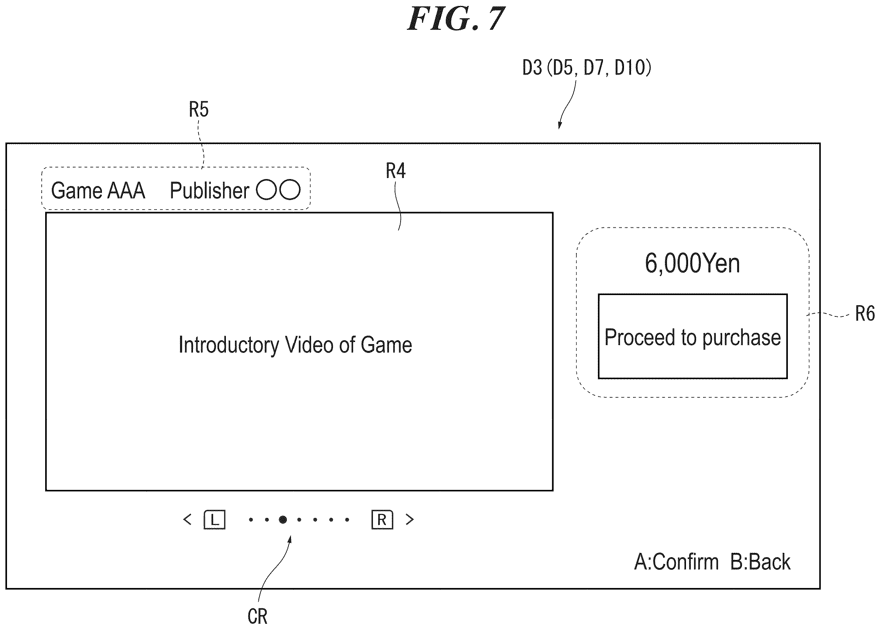

FIG. 7 is a diagram showing an example of the detailed screen D3 of the game. On the detailed screen D3 of the game, an introductory video of the game is displayed in a region R4, and game data is displayed in a region R5. Immediately after screen transition to the detailed screen D3, the introductory video of the game reproduced in the region R4 is identical to the video that was being reproduced on the video playback screen D2 of the screen transition source. Furthermore, at this time, a reproduction status of the video may be maintained before screen transition and after screen transition on the video playback screen D2 and the detailed screen D3. The reproduction status is, for example, a position where the video is reproduced on the screen, or how much time has elapsed since the reproduction of the video was started. Thereby, data associated with the game may be appropriately transmitted without impairing a user experience. Furthermore, the position and a size on the screen of the video on the video playback screen D2 and the detailed screen D3 may be different, for example. At this time, transition of the position and the size of the video on the video playback screen D2 and the detailed screen D3 may be performed stepwise.

As a specific method of video display in which the reproduction status is maintained, video control data of the introductory video comprised in the detailed screen D3 may be identical to video control data of the video comprised in the video playback screen D2. The video control data comprises, for example, a timestamp from a reproduction start time, and by using the identical video control data, a position where the video is resumed after screen transition may be set from a position where the video was interrupted on the screen before screen transition. Furthermore, a video component comprising the video control data may be identical on the video playback screen D2 and the detailed screen D3.

Furthermore, the video playback screen D2 and the detailed screen D3 may be configured as a single page based on a single-page application (SPA). A seamless video reproduction before and after screen transition may be realized by setting the introductory video of the game on the video playback screen D2 and the introductory video of the game on the detailed screen D3 to be the same video, and rewriting a part excluding a common part comprising the video. In this case, the video control data of the introductory video comprised in the detailed screen D3 and the video control data of the video comprised in the video playback screen D2 are identical.

On the detailed screen D3 of the game, when there are a plurality of introductory videos of the game, the plurality of introductory videos may be sequentially displayed in the region R4. In this case, a user interface of a carousel CR is displayed below the region R4 so that the plurality of introductory videos may be switched. The page indicator of the carousel CR may be replaced with a thumbnail of the introductory video. On the video playback screen D2 shown in FIG. 6, one video is reproduced repeatedly, but on the detailed screen D3 shown in FIG. 7, the plurality of introductory videos are sequentially reproduced. Because it is understood that the user actively displayed the detailed screen D3 with interest in the game, introducing the game in detail using the plurality of videos satisfies needs of the user. On the other hand, on the video playback screen D2 shown in FIG. 6, cognitive load on the user may be reduced by suppressing the amount of information, and game introduction may be performed appropriately.

On the detailed screen D3 of the game, a thumbnail image of the video being reproduced among the plurality of thumbnail images is displayed being enlarged more than other thumbnail images. When there are too many thumbnail images to fit, the detailed screen D3 has an interface for switching the thumbnail images using the R button and the L button.

On the detailed screen D3, a price of the game and an item of "Proceed to purchase" are displayed in a region R6 on the right side of an introductory screen of the game. This is an example of the item for acquiring the game. The item for acquiring the game is not limited to an item where the game may be acquired directly by operation input to the item, and for example, in this example, when the A button is pressed in a state where focus is on "Proceed to purchase," screen transition to a purchase procedure screen is performed, and a confirmation screen comprising a purchase button is displayed. When the B button (back button) 123 is pressed on the detailed screen D3, the detailed screen D3 returns to the video playback screen D2 (see FIG. 6). Thereby, the user may appropriately acquire desired data.

Here, the "Proceed to purchase" button is shown as the item for acquiring the game, but the item for acquiring the game may be an item where a procedure proceeds toward acquisition of the game. For example, a "View game details" button may be provided as the item for acquiring the game, and a further detailed screen comprising a purchase button may be displayed when the "View game details button" is pressed. Furthermore, the game may be acquired directly by operation input to the item for acquiring the game. Furthermore, the item for acquiring the game may be a display of characters or symbols etc. indicating that the game may be acquired by pressing a specified physical button. For example, a display of "X button: Purchase game" etc. may be comprised as the item for acquiring the game, and screen transition to the purchase procedure screen may be performed when the X button is pressed.

Acquisition of the game will be described here. Acquisition of the game may be direct acquisition by download etc. of a game program, granting of access authority or an access key, or indirect acquisition by cloud gaming, streaming, or mirroring. Furthermore, the game may be acquired by a terminal operated by the user, or the acquired game may be associated with an account associated with the user. Furthermore, a method of acquisition of the game is not limited to purchase such as outright purchase or subscription, and may be, for example, exchange with a specified item, distribution, lottery, or transfer etc.

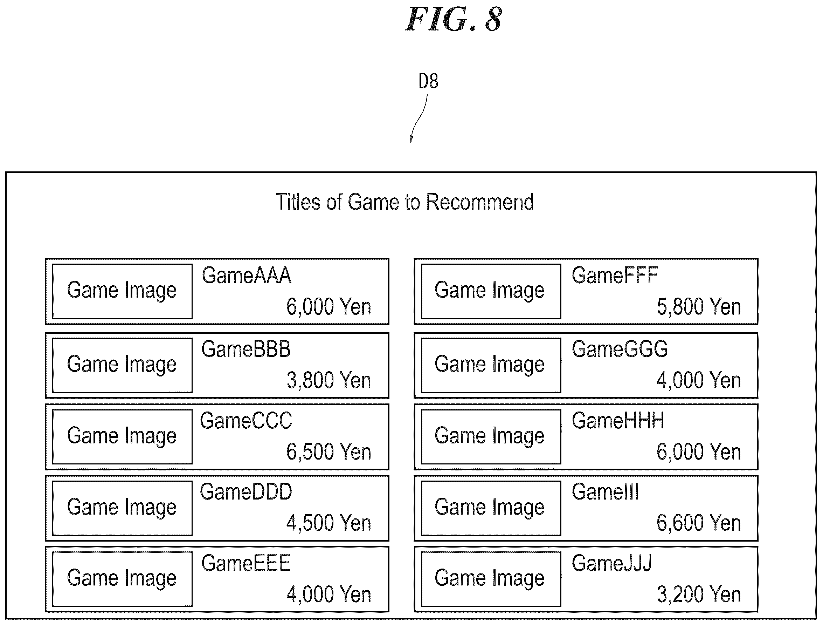

FIG. 8 is a diagram showing an example of the list screen D8 of titles of the game to recommend. The list screen D8 of titles of the game comprises information associated with the game to recommend. In this example, an image associated with the game, the title of the game, and a price are displayed in a list.

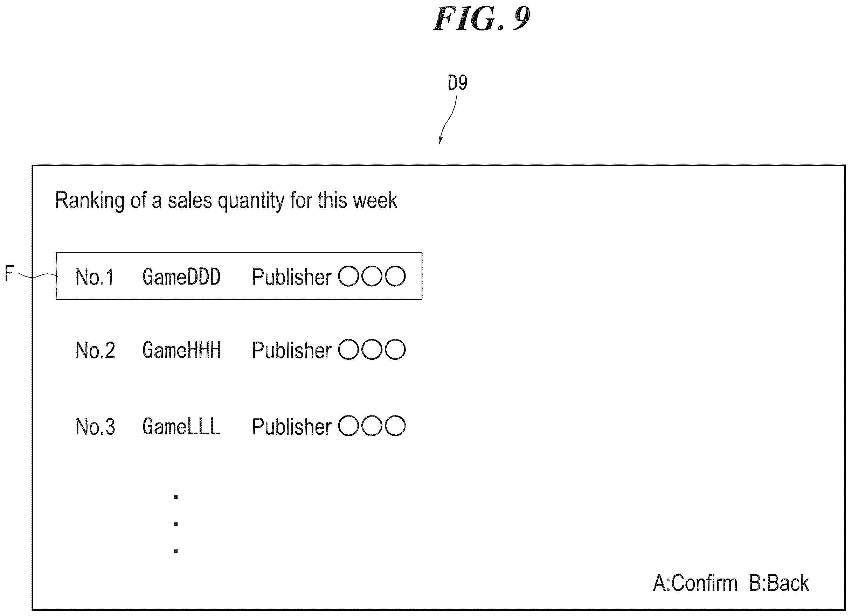

FIG. 9 is a diagram showing an example of the ranking screen D9 where screen transition is possible from the top screen D1. On the ranking screen D9 shown in FIG. 9, a ranking of a sales quantity for the week is displayed, and focus F is placed on "1st Place Game DDD Seller OOO." When the A button (determination button) is pressed on the ranking screen, the game on which the focus F is placed is selected, and a detailed screen D10 of the selected game is displayed. In the present embodiment, the detailed screen D10 of the game has the identical configuration as the game detailed screen D3 displayed via the video playback screen D2 of the game comprising the identical elements as the detailed screen D3 of the game shown in FIG. 7, and the game detailed screen displays the identical contents if the game is identical.

Returning to FIG. 3, a functional configuration of the game apparatus 10 will be described.

The game apparatus 10 comprises a game execution unit 18, and is an information processing apparatus that may execute the acquired game.

The game apparatus 10 has a recommendation data acquisition unit 11, a video acquisition unit 12, a recommendation reason determination unit 13, a second data acquisition unit 14, and an image generation unit 15. The recommendation data acquisition unit 11 transmits a request inquiring about the game to recommend to the user to the recommendation server 20, and acquires data of the identifier of the game to recommend from the recommendation server 20. Acquisition of data by the recommendation data acquisition unit 11 may be performed, for example, in a form of receiving data periodically transmitted from the recommendation server 20. Furthermore, acquisition of data may be performed in a form of receiving data transmitted based on that a new game to recommend is determined by the recommendation determination unit 21, for example. Furthermore, acquisition may be a combination of these etc.

Here, the game apparatus 10 transmits first data associated with a user to the recommendation server 20 as information used for determining the game to recommend.

The video acquisition unit 12 has a function of acquiring an introductory video of the game to recommend. Specifically, the video acquisition unit 12 transmits a request for game data corresponding to the identifier of the game to the shop server 30 based on the identifiers of the plurality of games to recommend transmitted from the recommendation server 20, and receives game data comprising the introductory video of the game from the shop server 30.

The recommendation reason determination unit 13 has a function of determining a recommendation reason for the game to recommend based on information associated with the game and information associated with the user. Data used for determination of the recommendation reason is, for example, data such as a play history of the user, a play history of a friend, or data of a game added in the wish list by the user etc., as information associated with the user. The wish list is a list comprising a game linked to each user, and the game is added to the list based on an operation by the user or that a specified condition is satisfied. Furthermore, user data used by the recommendation reason determination unit 13 is referred to as "second data associated with the user".

The first data associated with a user and the second data associated with the user may be identical data or may be different. Furthermore, a timing of acquisition and a data source of the first data associated with a user and the second data associated with the user may be different. Game data used for the recommendation reason is, for example, a genre of the game, a manufacturer, sale data, or ranking data etc.

A relationship between the recommendation reason and information that is a basis for determining the recommendation reason will be described here. The recommendation reason, information that is a basis for determining the recommendation reason, and a relationship between the recommendation reason and the information described below are one example. A part may be omitted, or other descriptions, data, or associations may be added. As information that is a basis of the recommendation reason, there is a "play history of a friend". The recommendation reason determination unit 13 determines whether or not the friend has played the game to recommend, based on the play history of the friend, and displays a name of the friend when the friend has played the game.

Furthermore, as information that is a basis of the recommendation reason, there is a "play history of the user" and "information of the game itself". The recommendation reason determination unit 13 displays the title and the genre of the game played in the past, based on the play history of the user and information associated with the genre and the manufacturer of the game, when the game to recommend is of the same genre as the game played in the past.

Furthermore, as information that is a basis of the recommendation reason, there is a "game added in the wish list by the user". The recommendation reason determination unit 13 displays that the game is the game added in the wish list as the recommendation reason when the game to recommend is the game added in the wish list by the user.

Furthermore, as information that is a basis of the recommendation reason, there are "sale data" and "ranking data". The recommendation reason determination unit 13 generates the recommendation reason based on the sale data and the ranking data of the game to recommend. In this case, information associated with the user is not used for generation of the recommendation reason. The recommendation reason may be determined without being based on data associated with the user.

The second data acquisition unit 14 acquires second data associated with the user used by the recommendation reason determination unit 13 for determination of the recommendation reason. Here, the second data acquisition unit 14 acquires the second data associated with the user from a user data server that manages user data, which is not illustrated. The second data acquisition unit 14 may acquire user data such as the play history of the user and data associated with the friend etc. from the storage unit 17.

The recommendation reason determination unit 13 determines the recommendation reason when the update condition is satisfied. For example, the recommendation reason may be determined when the shop application is executed or when a specified time elapses during execution. The recommendation reason determination unit 13 may generate the recommendation reason when the second data acquisition unit 14 acquires the second data associated with the user. Thereby, the recommendation reason may be determined based on newer user data.

In the present embodiment, a timing of update of the recommendation reason and a timing of determination of the game to recommend by the recommendation server 20 are independent. For example, when determination of the game to recommend is every week, the game to recommend is the same during the week, but the recommendation reason may change even during the week.

The image generation unit 15 has a function of outputting an image that introduces the game to recommend. Specifically, the image generation unit 15 outputs the image described using FIGS. 4 to 9. The image generation unit 15 outputs a video playback screen (see FIG. 6) comprising the video acquired by the video acquisition unit 12 and the recommendation reason. In the image shown in FIG. 6, the recommendation reason is displayed as text data, but the recommendation reason may be configured by a figure or an icon.

For example, an icon of the friend may be displayed when the friend plays the game, or an icon indicating attention may be displayed if the game is a game whose ranking is sharply rising. Furthermore, the image generation unit 15 may select the recommendation reason from data generated in advance, or may generate the recommendation reason each time.

The image generation unit 15 displays the video playback screen of the next game when the right button 112 is pressed on the video playback screen. The image generation unit 15 switches and displays the video playback screen by the number of games to recommend, and displays the game list screen D8 of the game to recommend after the last video playback screen D6 (see FIG. 8). Furthermore, the image generation unit 15 displays the detailed screen D3 etc. of the game (see FIG. 7) when the A button (determination button) is pressed on the video playback screen D2 etc. (see FIG. 6).

The game selection unit 16 has a function of accepting selection of the game even on screens other than the video playback screens D2, D4, and D6 of the game. For example, on the ranking display screen D9 shown in FIG. 9, when input of the A button (determination button) is accepted in a state where focus is placed on a specified game, selection of the game on which the focus is placed is accepted. When the game selection unit 16 accepts selection of the game, the image generation unit 15 displays the detailed screen D10 of the selected game.

The game detailed screen D10 has the identical screen configuration as the detailed screen D3 etc. to which screen transition is performed when the A button is pressed on the video playback screen D2 etc., and the detailed screen having the identical configuration is displayed if the target game is identical. Due to this configuration, processing may be speeded up by caching data of the detailed screen in the storage unit 17. Furthermore, by presenting the detailed screen having the identical configuration to the user, data may be presented so that the user is not confused.

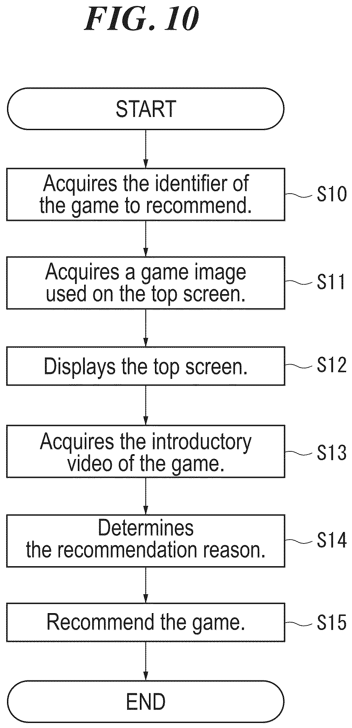

FIG. 10 is a flowchart showing an operation of introduction of the game by the game apparatus 10. When the shop application is started by the game apparatus 10, the game apparatus 10 accesses the recommendation server 20, and acquires the identifier of the game to recommend to the user from the recommendation server 20 (S10). Subsequently, the game apparatus 10 accesses the shop server 30, and acquires a game image used on the top screen D1 (S11). Since the top screen D1 comprises the menu items of "Search," "Recommend," and "Ranking," the game image to be displayed when focus is placed on the respective menu items is acquired in advance. For example, when "Recommend" is selected, the game image corresponding to the game to recommend is displayed. The processing in S10 and S11 may be performed in parallel, regardless of an order of processing. Not limited to this, the order of processing in the present example is merely one example, and the order may be appropriately changed. Furthermore, a plurality of processes may be performed in parallel.

Next, the game apparatus 10 displays the top screen D1 (S12). That is, the identifier of the game to recommend is acquired at a stage before "Recommend" is selected from the top screen D1, that is, at a stage where the shop application is started.

In the present embodiment, the identifier of the game to recommend is acquired from the recommendation server 20 every time the shop application is started, but the identifier of the game may be acquired by accessing the recommendation server 20 when the shop application is started for the first time after the game to recommend is updated.

The number of games recommended by the game apparatus 10 is arbitrary, but in the present embodiment, a maximum of 10 games are introduced. In this case, the game apparatus 10 receives identifiers of 10 games from the recommendation server 20. Alternatively, the game apparatus 10 may receive identifiers of 11 or more games from the recommendation server 20, select 10 games from the identifiers, and perform recommendation. For example, when there is a game that may not be recommended to the user due to a rating (age restriction) of the game, recommendation needs to be performed excluding the game. In preparation for such a case, it is desirable to acquire more games to recommend than the number of games actually recommended from the recommendation server 20.

When "Recommend" is selected on the top screen D1, screen transition to a screen that displays the introductory video of the game is performed. FIG. 10 shows the operation of game introduction, but it is of course possible to select another item on the top screen D1, and in that case, another flow corresponding to the selected menu item is executed.

When "Recommend" is selected on the top screen D1, the game apparatus 10 accesses the shop server 30, and acquires the introductory video of the game to recommend (S13). Specifically, the game apparatus 10 transmits the identifier of the game to recommend to the shop server 30, and acquires the introductory video of the game corresponding to the identifier of the game from the shop server 30. Data corresponding to the introductory video of the game itself may be acquired at this time, or information corresponding to the introductory video of the game may be acquired, for example, a web link comprising a request for acquiring the introductory video of the game. In this case, when the introductory video of the game corresponding to the web link is reproduced by the game apparatus 10, the introductory video of the game may be acquired and reproduced based on the web link. Furthermore, for example, the target of acquisition may be all games to recommend, or may be a part of the games. For example, only the introductory video of the game displayed on the video playback screen D2 may be acquired in step S13, and the introductory video of the game to recommend corresponding to the video playback screen may be acquired when screen transition to the video playback screens D4 and D6 is performed in step S15.

Subsequently, the game apparatus 10 determines the recommendation reason of the game (S14). The recommendation reason determination unit 13 determines the recommendation reason based on information associated with the user and information associated with the game to recommend. When there are a plurality of recommendation reasons, the recommendation reason determination unit 13 determines all corresponding recommendation reasons. Conversely, when there is no recommendation reason, the recommendation reason determination unit 13 sets the recommendation reason to none, and makes a column of the recommendation reason blank on the video playback screen. The game to recommend where determination processing of the recommendation reason is not performed by the recommendation reason determination unit 13 may be comprised, and in that case, the processing is not performed. Furthermore, when there are a plurality of recommendation reasons, an upper limit number may be set for the recommendation reason. At this time, the recommendation determination unit 13 determines the recommendation reason equal to or less than the upper limit number based on a specified condition.

Next, the game apparatus 10 introduces the game to recommend by performing the screen transition described in FIG. 4 (S15). When screen transition to the detailed screens D3, D5, D7 etc. shown in FIG. 7 is performed, the game apparatus 10 transmits the identifier of the corresponding game to the shop server 30, and acquires detailed data to display on the detailed screen from the shop server 30.

The game apparatus 10 of the present embodiment may transmit that the game to introduce is suitable for the user by displaying the recommendation reason based on the user data on the video playback screens D2, D4, and D6 of the game, and may present data that may be used as a reference more appropriately when the user selects the game to acquire.

The game apparatus 10 performs communication with the shop server 30 to generate the image that introduces the game. This communication is divided into step S11 of acquiring the game image to display on the top screen, step S13 of acquiring the introductory video of the game from the shop server 30, and step S15 of acquiring detailed data of the game from the shop server 30. Thereby, a communication amount of each processing is suppressed, and a load on the shop server 30 is reduced. Furthermore, data acquired in these steps is not limited to the above-described data, and for example, in other embodiments, all data may be acquired in one step.

As described above, the information processing apparatus and A computer-implemented method of the present embodiment have been described in detail by giving the embodiment, but the present invention is not limited to the above-described embodiment.

In the above-described embodiment, the example where the video used on the video playback screen (see FIG. 6) and the detailed screen (see FIG. 7) is acquired from the shop server 30 was given, but an acquisition source of the video is not limited to the shop server 30. For example, the video may be generated in the game apparatus 10, and the generated video may be acquired.

In the above-described embodiment, the information processing system comprising the recommendation server, the shop server, and the game apparatus was given as an example, but a configuration of the system is not limited to this. For example, the recommendation server may not be comprised. At this time, the game apparatus 10 may comprise the recommendation determination unit 21, and may store the identifier of the game determined as the game to recommend in the storage unit 17. Furthermore, the system may comprise an information processing apparatus different from the game apparatus, and the information processing apparatus may comprise at least the second data acquisition unit and the recommendation reason determination unit. Furthermore, the information processing apparatus may comprise the video acquisition unit and the image generation unit, or another information processing apparatus comprising the video acquisition unit and the image generation unit may acquire the recommendation reason and recommendation data, and perform display based on the recommendation reason and recommendation data. Furthermore, not limited to these, where the respective units are comprised in the information processing system and what kind of components are comprised in the system are not limited to the examples given in the above-described embodiment.

The introductory video of the game is an example of video associated with the game.

The introductory video is not limited to this. The video associated with the game comprises, for example, a play video of the game by another user etc.

In the above-described embodiment, the example where the identical screen is used for the detailed screen displayed in screen transition of introduction of the game (see FIG. 4) (see FIG. 7) and the detailed screen to which screen transition is performed from another screen such as the ranking screen (see FIG. 9) etc. was given, but a part of display on the detailed screen, such as the item for acquiring the game comprised in the detailed screen etc., may be made different.

### Description of Reference Numerals

- 1: Information processing system
- 10: game apparatus
- 11: recommendation data acquisition unit
- 12: video acquisition unit
- 13: recommendation reason determination unit
- 14: second data acquisition unit
- 15: image generation unit
- 16: game selection unit
- 17: storage unit
- 18: game execution unit
- 20: recommendation server
- 21: recommendation determination unit
- 22: first data acquisition unit
- 23: storage unit
- 30: shop server
- 31: game data transmission unit
- 32: storage unit

## Claims

1. An information processing system comprising:
a recommendation determination means configured to determine a plurality of games to recommend to a user based on first data associated with the user;
a video acquisition means configured to acquire a video associated with each of the plurality of games;
a recommendation reason determination means configured to determine a first recommendation reason for recommending a first game among the plurality of games to the user based on data associated with the first game and second data associated with the user; and
an image output means configured to output a first image including the video associated with the first game and the first recommendation reason,
wherein, when the first image is being output, the image output means outputs a second image including an item for acquiring the game for the user to acquire the first game, based on a first user input.

2. The information processing system according to claim 1, wherein the recommendation determination means determines the plurality of games to recommend every predetermined period.

3. The information processing system according to claim 1 or 2, further comprising:
a second data acquisition means configured to acquire the second data associated with the user,
wherein the recommendation reason determination means determines the first recommendation reason when the second data associated with the user is acquired.

4. The information processing system according to claim 3, wherein the information processing system includes a server and an information processing apparatus,
the server includes the recommendation determination means, and
the information processing apparatus includes the second data acquisition means and the recommendation reason determination means.

5. The information processing system according to claim 2, wherein the recommendation reason determination means changes the first recommendation reason when an update condition is satisfied within the predetermined period.

6. The information processing system according to claim 1, wherein the information processing system includes an information processing apparatus, and
the information processing apparatus includes the video acquisition means, the image output means, and a game execution means configured to execute the acquired game.

7. The information processing system according to claim 1, wherein the plurality of games include a second game,
the recommendation reason determination means determines a second recommendation reason based on data associated with the second game and the second data associated with the user, and
when the first image is being output, based on a predetermined condition, the image output means outputs, in place of the first image, a third image including the video associated with the second game and the second recommendation reason.

8. The information processing system according to claim 1, wherein the plurality of games include a third game,
the image output means outputs a fourth image including the video associated with the third game, and
the fourth image does not include a third recommendation reason determined based on data associated with the third game and the second data associated with the user.

9. The information processing system according to claim 1, 7 or 8, wherein the image output means outputs a fifth image including game information associated with each of the plurality of games.

10. The information processing system according to claim 1, wherein, when the second image is being output, the image output means outputs the first image based on a second user input.

11. The information processing system according to claim 1 or 10, wherein the second image includes the video,
the video included in the second image is reproduced based on video control data identical to video control data for the video in the first image, and
the video control data includes a timestamp from a reproduction start time.

12. The information processing system according to claim 1, further comprising a game selection means capable of selecting one game based on a third user input when the first image is not output,
wherein, when the first game is selected by the game selection means, the image output means outputs a sixth image, and
the sixth image includes at least the video associated with the first game and the item for acquiring the game for the user to acquire the first game.

13. The information processing system according to claim 12, wherein, when there is a plurality of the videos associated with the first game, the first image includes only one of the plurality of the videos, and the sixth image includes all of the plurality of the videos.

14. The information processing system according to claim 12, wherein the information processing system includes an information processing apparatus,
the information processing apparatus comprises:
a storage means configured to store, when the second image or the sixth image is output, information used for the output of the second image or the sixth image; and
the image output means,
wherein, when outputting the second image or the sixth image, the image output means outputs the second image or the sixth image using the information used for the output if the information is in the storage means.

15. A computer-implemented method comprising:
acquiring information on a plurality of games determined based on first data associated with a user;
acquiring a video associated with each of the plurality of games;
determining, a first recommendation reason for recommending a first game among the plurality of games to the user based on data associated with the first game and second data associated with the user;
outputting a first image including the video associated with the first game and the first recommendation reason; and
outputting, when the first image is being output, a second image including an item for acquiring the game for the user to acquire the first game based on a first user input.
